# EUROPÄISCHE PATENTANMELDUNG

(11) **EP 1 215 757 A1**
(43) Veröffentlichungstag der Anmeldung: **19.06.2002**
(21) Anmeldenummer: 01126484.3
(22) Anmeldetag: 09.11.2001
(51) Int. Cl.: H01R 11/28

(54) **Batterieklemme**

(30) Priorität: 14.12.2000 DE 20021126 U
(71) Anmelder: Harting Automotive GmbH & Co. KG, 32339 Espelkamp (DE)
(72) Erfinder: Mouissie, Bob, 5258 EK Berlicum (NL)
(74) Vertreter: Sties, Jochen, Dipl.-Ing.

(57) **Zusammenfassung**

Die Erfindung betrifft eine Batterieklemme mit einem Kontaktring (16), der auf einen Batteriepol aufgesetzt werden kann, und einem Anschlußbolzen (22), an dem ein Kabel angeschraubt werden kann. Die Batterieklemme ist dadurch gekennzeichnet, daß der Kontaktring (16) aus zwei Blechlaschen (12, 14) gebildet ist, die jeweils in einen Zwischenabschnitt (18) übergehen, in welchem sie sich parallel zueinander im Abstand erstrecken. Die Blechlaschen gehen anschließend in einen Anschlußabschnitt (20) über, in welchem der Anschlußbolzen (22) angeordnet ist, wobei eine Versteifungslasche (40) vorgesehen ist, die sich ausgehend vom Anschlußabschnitt zwischen die beiden Zwischenabschnitte (18) erstreckt und dort mit den beiden Blechlaschen (12, 14) schubfest verbunden ist.

## Beschreibung

Die Erfindung betrifft eine Batterieklemme mit einem Kontaktring, der auf einen Batteriepol aufgesetzt werden kann, und einem Anschlußbolzen, an dem ein Kabel angeschraubt werden kann.

Im Gegensatz zu Batterieklemmen, bei denen das an die Batterie anzuschließende Kabel an die Batterieklemme angecrimpt wird, wirkt auf Batterieklemmen mit einem Anschlußbolzen bei der Anbringung des Kabels ein Drehmoment ein. Dieses Drehmoment kann bei herkömmlichen Batterieklemmen problemlos aufgenommen werden, da sie üblicherweise aus einem massiven Metallkörper bestehen, der die notwendige Festigkeit aufweist. Nachteilig bei einer solchen Batterieklemme ist aber das hohe Gewicht verbunden mit den hohen Herstellkosten.

Von Batterieklemmen, an die das Kabel angecrimpt wird, ist bekannt, anstelle des massiven Metallkörpers eine Blechbiegeteil zu verwenden. Ein solches Blechbiegeteil hat jedoch nicht die erforderliche Festigkeit, um ohne übermäßige Verformung das Drehmoment aufzunehmen, das beim Aufschrauben des Kabels bzw. der das Kabel befestigenden Mutter in die Batterieklemme eingeleitet wird.

Die Aufgabe der Erfindung besteht darin, eine Batterieklemme zu schaffen, die bei geringen Herstellungskosten und geringem Gewicht die Verwendung eines Anschlußbolzens für das anzuschließende Kabel ermöglicht.

Zu diesem Zweck ist bei einer Batterieklemme der eingangs genannten Art vorgesehen, daß der Kontaktring aus zwei Blechlaschen gebildet ist, die jeweils in einen Zwischenabschnitt übergehen, in welchem sie sich parallel zueinander im Abstand erstrecken, und anschließend in einen Anschlußabschnitt, in welchem der Anschlußbolzen angeordnet ist, wobei eine Versteifungslasche vorgesehen ist, die sich ausgehend vom Anschlußabschnitt zwischen die beiden Zwischenabschnitte erstreckt und dort mit den beiden Blechlaschen schubfest verbunden ist. Die erfindungsgemäße Batterieklemme weist also als Körper ein Blechbiegeteil auf, das sehr steif ist, insbesondere im Hinblick auf Belastungen durch ein Drehmoment, das auf den Anschlußbolzen aufgebracht wird, und gleichzeitig kostengünstig hergestellt werden kann sowie ein geringes Gewicht hat.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In diesen zeigen:
- Figur 1 die erfindungsgemäße Batterieklemme in einer perspektivischen, teilgeschnittenen Ansicht, wobei der Anschlußabschnitt weggelassen wurde;
- Figur 2 die erfindungsgemäße Batterieklemme in einer weiteren perspektivischen Ansicht;
- Figur 3 den Kontaktring der Batterieklemme von Figur 1 in einer perspektivischen Ansicht;
- Figur 4 den Kontaktring der Batterieklemme von Figur 1 mit aufgesetzter Feder in einer perspektivischen Ansicht;
- Figur 5 den Körper der Batterieklemme in einer perspektivischen Draufsicht;
- Figur 6 den Körper der Batterieklemme in einer perspektivischen Unteransicht; und
- Figur 7 ein Stanzteil, das in den in den Figuren 5 und 6 gezeigten Körper umgeformt werden kann.

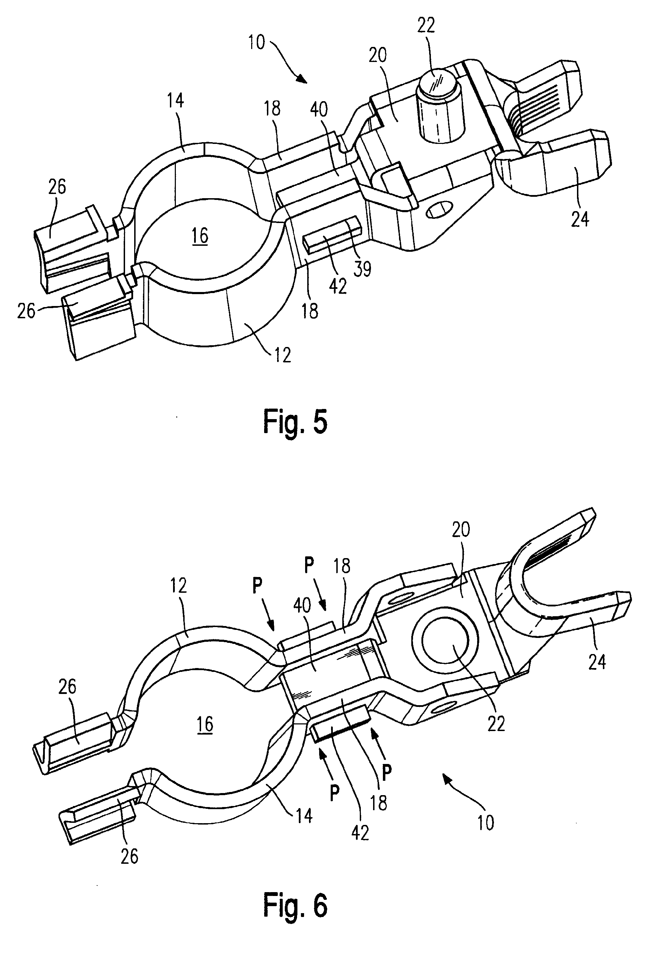

Der zentrale Bestandteil der Batterieklemme ist ein als Blechbiegeteil ausgebildeter Körper 10 (siehe insbesondere die Figuren 5 und 6). Der Körper 10 besteht im wesentlichen aus zwei Blechlaschen 12, 14, die etwa halbkreisförmig verlaufen, so daß sie zusammen einen Kontaktring 16 bilden, der auf einen Batteriepol aufgesetzt werden kann. Der Kontaktring ist entsprechend dem Batteriepol konisch ausgebildet und auf seiner Innenseite geriffelt, um den Halt des Kontaktringes auf dem Batteriepol zu verbessern.

Die Blechlaschen 12, 14 gehen anschließend an den Kontaktring jeweils in einen Zwischenabschnitt 18 über, in welchem sie parallel zueinander im Abstand verlaufen. Anschließend gehen die beiden Blechlaschen in einen gemeinsamen Anschlußabschnitt 20 über, so daß sie einstückig miteinander verbunden sind.

Am Anschlußabschnitt 20 ist ein Anschlußbolzen 22 angebracht, mittels dem ein Kabel an die Batterieklemme angeschraubt werden kann. Am Anschlußabschnitt 20 ist auch ein Crimpabschnitt 24 angebracht, mittels dem ein Kabel an die Batterieklemme angecrimpt werden kann.

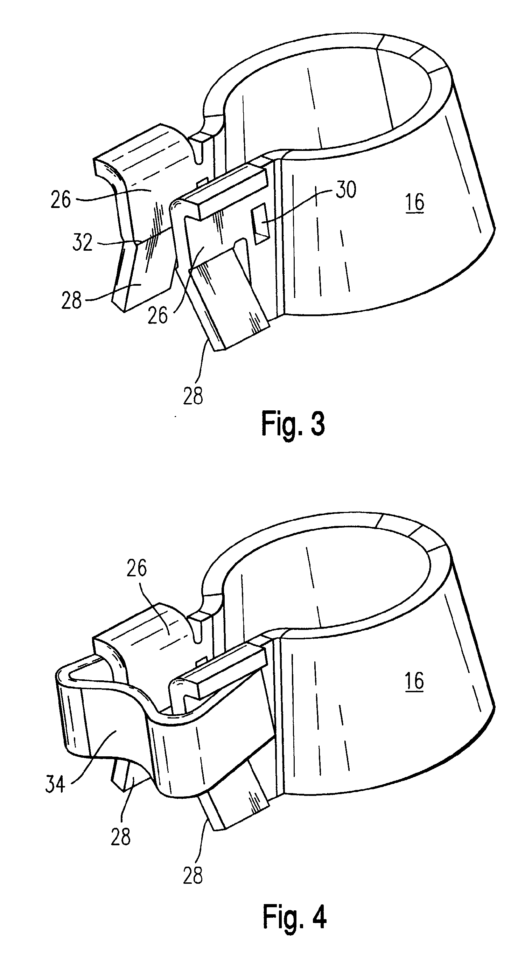

Die Blechlaschen 12, 14 sind auf ihrer vom Anschlußabschnitt abgewandten Seite mit jeweils einer Klemmlasche 26 (siehe insbesondere Figur 3) versehen. Jede Klemmlasche 26 ist mit einer Schräge 28 sowie einer Aussparung 30 versehen. Am Übergang zwischen der Schräge 28 und der Klemmlasche 26 ist eine Arretierkante 32 ausgebildet, die um etwa 0,3 bis 0,5 mm vorsteht.

An den Klemmlaschen 26 des Kontaktringes 16 greift eine Feder 34 (siehe Figur 4) an, welche die Klemmlaschen 26 zusammenzudrücken sucht. Um ein Abrutschen der Feder 34 zu verhindern, ist diese mit zwei Nasen versehen, welche in die Aussparungen 30 der Klemmlaschen 26 eingreifen.

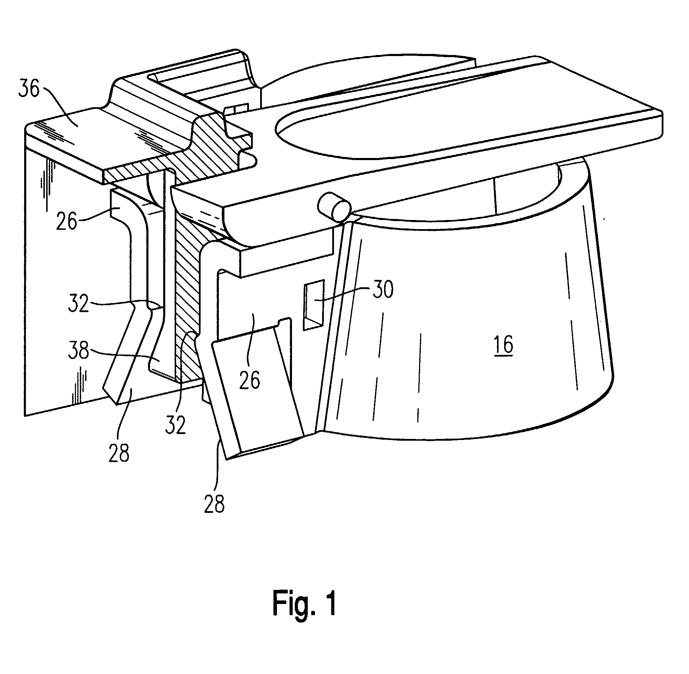

Die Batterieklemme ist mit einer Abdeckkappe 36 (siehe insbesondere Figur 1) versehen, welche den Kontaktring 16 überdeckt und schwenkbar an dem Körper 10 gelagert ist. Die Abdeckkappe 36 ist mit einem Sperrkeil 38 versehen, der einstückig an die Abdeckkappe 36 angeformt und zwischen den beiden mit den Schrägen 28 versehenen Klemmlaschen 26 des Kontaktringes 16 angeordnet ist.

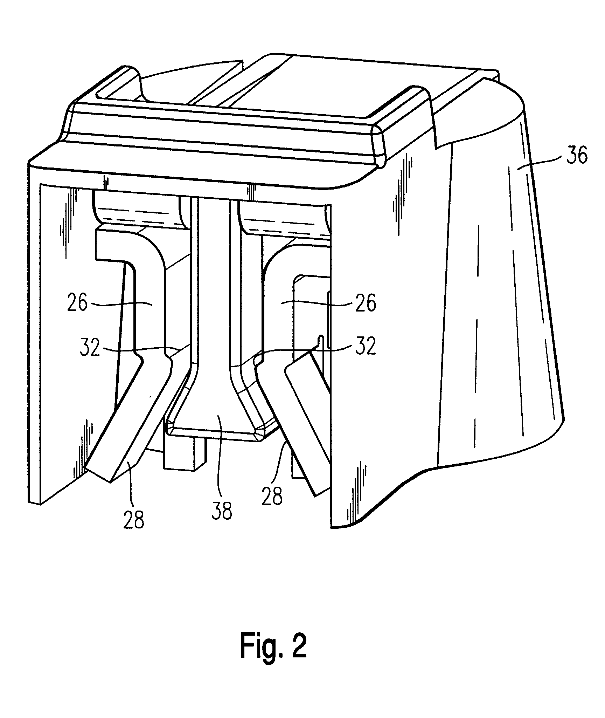

Der Sperrkeil 38 kann zusammen mit der Abdeckkappe 36 zwischen einer Kontaktstellung, die in den Figuren 1 und 2 gezeigt ist, und einer Montagestellung verstellt werden, die in den Figuren nicht gezeigt ist. In der Kontaktstellung befindet sich der Sperrkeil in einem Bereich zwischen den beiden Schrägen 28, in welchem er diese nicht berührt. Somit kann der Klemmring 16 mittels der beiden Klemmlaschen 26 zusammengezogen werden. In der Montagestellung befindet sich der Sperrkeil 38 zwischen den beiden Klemmlaschen 26 oberhalb der Arretierkante 32, so daß der Klemmring gespreizt ist und auf einen Batteriepol aufgesetzt oder von diesem abgezogen werden kann.

Die Einzelheiten der Ausbildung des Abdeckkappe und der Art und Weise der Verstellung des Sperrkeils sind für das Verständnis der erfindungsgemäßen Batterieklemme nicht relevant, so daß an dieser Stelle nicht weiter darauf eingegangen wird. Eine detaillierte Beschreibung findet sich in der Deutschen Patentanmeldung 199 45 407.

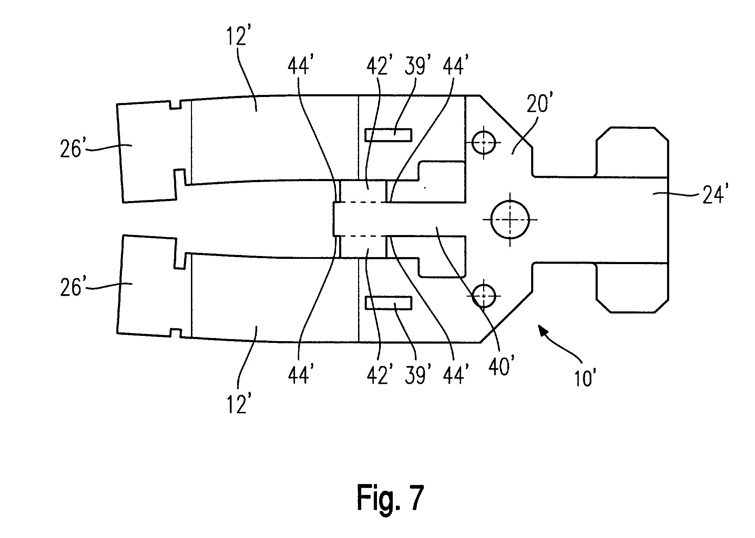

Nachfolgend wird die Gestaltung des Körpers 10 ausführlicher anhand der Figuren 5 bis 7 beschrieben. Die Blechlaschen 12, 14 erstrecken sich im Zwischenabschnitt 18 in einer Ebene, die etwa senkrecht zu der Ebene ist, in der sich der Anschlußabschnitt 20 erstreckt. Im Bereich der Zwischenabschnitte ist jede Blechlasche mit einer Aussparung 39 versehen (siehe auch in Figur 7 die Aussparung 39' am Stanzteil 10', das später in den Körper 10 gebogen wird).

Ausgehend vom Anschlußabschnitt 20 erstreckt sich eine Versteifungslasche 40, die abgekröpft ist und an ihrem Ende zwei Vorsprünge 42 auf entgegengesetzten Seiten aufweist (siehe in Figur 7 die durch die gestrichelten Linien von der Versteifungslasche abgegrenzten Bereiche 42'). Die Breite der beiden Vorsprünge entspricht der Breite der Aussparungen 39 im Zwischenabschnitt der Blechlaschen 12, 14, während die Höhe der Aussparungen 39 der Dicke des Materials der Versteifungslasche entspricht. Jeder Vorsprung 42 kann also paßgenau in einer der Aussparungen 39 aufgenommen werden. Die Höhe der beiden Vorsprünge ist größer als die Materialdicke der Blechlaschen. Die neben den Vorsprüngen 42 liegenden Abschnitte der Versteifungslaschen bilden Abstützflächen 44.

In Figur 7 ist zu sehen, daß die Versteifungslasche kostengünstig zwischen den beiden Blechlaschen 12' 14' aus Material gebildet werden kann, das andernfalls zum Verschnitt gehört hätte.

Wie in den Figuren 5 und 6 zu sehen ist, werden die Vorsprünge 42 der Versteifungslasche 40 durch die Aussparungen 39 in den Zwischenabschnitten der Blechlaschen gesteckt, so daß die Abstützflächen 44 der Versteifungslasche 40 an der Innenseite der Blechlaschen anliegen und die Vorsprünge über die Außenseite der Blechlaschen hervorstehen. Dann werden die Vorsprünge 42 auf der Außenseite der Blechlaschen gestaucht, verstemmt, gecrimpt oder in anderer Weise plastisch verformt (in Figur 6 durch die Pfeile P angedeutet), vorzugsweise an ihren Außenrändern und in einer Richtung senkrecht zu der von ihnen definierten Ebene, so daß sie nicht mehr durch die Aussparungen hindurchtreten können. Die Versteifungslasche 40 ist somit schubfest mit den beiden Blechlaschen verbunden, und eine Verschiebung der beiden Blechlaschen parallel zueinander, wie sie ein auf den Anschlußbolzen aufgebrachtes Drehmoment hervorzurufen sucht, ist verhindert. Es kann nun auf den Anschlußbolzen beim Anschrauben eines Kabels gefahrlos ein hohes Drehmoment aufgebracht werden, ohne daß es zu einer übermäßigen Verformung des Körpers 10 der Batterieklemme kommen kann.

Gemäß einer in den Figuren nicht dargestellten alternativen Ausgestaltung kann die Versteifungslasche auch eben ausgebildet werden, also nicht abgekröpft. Sie erstreckt sich dann ausgehend vom Anschlußabschnitt der Batterieklemme schräg nach unten in den Bereich der Zwischenabschnitte. Die Aussparungen zur Aufnahme der Vorsprünge sind ebenfalls schräg ausgerichtet, so daß ihre gedachte Verlängerung durch den zum Kontaktring weisenden Rand des Anschlußabschnittes verläuft.

Die Versteifungslasche wird bei dieser Alternative etwas kürzer ausgeführt als beim gezeigten Ausführungsbeispiel, da sie nicht abgekröpft und damit zweifach gebogen verläuft, sondern nur einfach gebogen. Der Vorteil gegenüber der in den Figuren gezeigten Ausführungsform besteht darin, daß die Versteifungslasche nur ein einziges Mal abgebogen werden muß, nämlich am Übergang zum Anschlußabschnitt.

## Patentansprüche

1. Batterieklemme mit einem Kontaktring (16), der auf einen Batteriepol aufgesetzt werden kann, und einem Anschlußbolzen (22), an dem ein Kabel angeschraubt werden kann, **dadurch gekennzeichnet, daß** der Kontaktring (16) aus zwei Blechlaschen (12, 14) gebildet ist, die jeweils in einen Zwischenabschnitt (18) übergehen, in welchem sie sich parallel zueinander im Abstand erstrekken, und anschließend in einen Anschlußabschnitt (20), in welchem der Anschlußbolzen (22) angeordnet ist, wobei eine Versteifungslasche (40) vorgesehen ist, die sich ausgehend vom Anschlußabschnitt zwischen die beiden Zwischenabschnitte (18) erstreckt und dort mit den beiden Blechlaschen (12, 14) schubfest verbunden ist.

2. Batterieklemme nach Anspruch 1, **dadurch gekennzeichnet, daß** jede Blechlasche (12, 14) im Bereich ihres Zwischenabschnittes (18) eine Aussparung (39) aufweist und daß die Versteifungslasche (40) mit zwei Vorsprüngen (42) versehen ist, die sich durch die Aussparungen hindurch erstrecken.

3. Batterieklemme nach Anspruch 2, **dadurch gekennzeichnet, daß** die Vorsprünge (42) auf der Außenseite der Blechlaschen (12, 14) plastisch verformt sind, so daß die Versteifungslasche (40) fest mit den beiden Blechlaschen verbunden ist.

4. Batterieklemme nach Anspruch 2 oder Anspruch 3, **dadurch gekennzeichnet, daß** beiderseits der Vorsprünge eine Abstützfläche (44) an der Versteifungslasche (40) vorgesehen ist, die auf der Innenseite der Blechlaschen anliegt.

5. Batterieklemme nach einem der vorhergehenden Ansprüche, **dadurch gekennzeichnet, daß** die beiden Blechlaschen (12, 14) sich im Bereich des Zwischenabschnitts (18) in einer Ebene erstrecken, die etwa senkrecht zur Ebene des Anschlußabschnittes (20) ist.

6. Batterieklemme nach einem der vorhergehenden Ansprüche, **dadurch gekennzeichnet, daß** der Anschlußabschnitt (20) mit einem Crimpabschnitt (24) versehen ist, in welchem ein Kabel angecrimpt werden kann.

7. Batterieklemme nach einem der vorhergehenden Ansprüche, **dadurch gekennzeichnet, daß** sich die Versteifungslasche (40) mit Bereich der Zwischenabschnitte (18) parallel zum Anschlußabschnitt (20) erstreckt.

8. Batterieklemme nach einem der vorhergehenden Ansprüche, **dadurch gekennzeichnet, daß** sich die Versteifungslasche mit Bereich der Zwischenabschnitte schräg zur Ebene des Anschlußabschnitts erstreckt.
